(19) **Europäisches Patentamt / European Patent Office / Office européen des brevets**

(11) **EP 2 331 475 B1**

(12) **FASCICULE DE BREVET EUROPEEN**

(45) Date de publication et mention
de la délivrance du brevet:
**16.05.2018 Bulletin 2018/20**

(21) Numéro de dépôt: **09783110.1**

(22) Date de dépôt: **17.09.2009**

(51) Int Cl.:
*C03C 17/245* (2006.01)     *C03C 17/34* (2006.01)

(86) Numéro de dépôt international:
**PCT/EP2009/062043**

(87) Numéro de publication internationale:
**WO 2010/031808 (25.03.2010 Gazette 2010/12)**

(54) **VITRAGE À RÉFLEXION ÉLEVÉE**

VERGLASUNG MIT ERHÖHTER REFLEXION

HIGH-REFLECTION GLAZING

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **17.09.2008 EP 08164513**

(43) Date de publication de la demande:
**15.06.2011 Bulletin 2011/24**

(73) Titulaire: **AGC Glass Europe**
**1348 Louvain-la-Neuve (BE)**

(72) Inventeurs:
- **COSTER, Dominique**
  **B-6040 Jumet (BE)**
- **DI STEFANO, Gaëtan**
  **B-6040 Jumet (BE)**
- **DUSOULIER, Laurent**
  **B-6040 Jumet (BE)**

(74) Mandataire: **Le Vaguerèse, Sylvain Jacques**
**AGC Glass Europe**
**Technovation Centre**
**IP Department**
**Rue Louis Blériot, 12**
**6041 Gosselies (BE)**

(56) Documents cités:
| | |
|---|---|
| EP-A- 1 068 899 | EP-A- 1 211 524 |
| WO-A-00/12304 | WO-A-2007/010462 |
| FR-A- 2 793 889 | US-A1- 2007 184 291 |

- BURDIS M S: "Properties of sputtered thin films of vanadium-titanium oxide for use in electrochromic windows" THIN SOLID FILMS, ELSEVIER-SEQUOIA S.A. LAUSANNE, CH, vol. 311, no. 1-2, 31 décembre 1997 (1997-12-31), pages 286-298, XP004121356 ISSN: 0040-6090
- MOTOV O A ET AL: "PROPERTIES OF THIN LAYERS OF MIXTURES OF TITANIUM, NIOBIUM AND ZIRCONIUM OXIDES, OBTAINED BY CATHODE SPUTTERING" OPTIKO MEHANICESKAA PROMYSLENNOST, LENINGRAD, RU, vol. 45, no. 3, 1 janvier 1978 (1978-01-01), pages 47-49, XP008023034 ISSN: 0030-4042

**Description**

La présente invention concerne des vitrages qui présentent une réflexion élevée dans le domaine visible tout en conservant une part significative de transmission.

Les vitrages en question sont utiles notamment pour limiter l'apport énergétique naturel notamment dans les bâtiments exposés à un ensoleillement important. La limitation de l'apport énergétique permet d'économiser le recours à la climatisation. Les vitrages en question sont aussi caractérisé par leur « facteur solaire » grandeur désignant le rapport de l'énergie à la fois transmise à travers le vitrage et réémise par celui-ci vers l'intérieur, après absorption, à l'énergie totale incidente.

Des vitrages de ce type sont le plus souvent constitués en revêtant la feuille de verre d'une couche, ou d'un système de couches dites « dures ». Ces couches sont traditionnellement déposées par pyrolyse sur le verre chaud immédiatement après formation de la feuille. Le plus usuel est de procéder à la pyrolyse « en ligne » c'est-à-dire sur le site même de production du verre. Le ruban de verre constitué sur la ligne « float » est revêtu alors qu'il est encore à haute température.

Une particularité reconnue des produits obtenus par pyrolyse, est qu'ils sont relativement durs. Ils résistent bien à la fois aux agressions chimiques et mécaniques. Pour cette raison ils sont commodément utilisés, éventuellement en exposant la face revêtue aux aléas externes. Cette particularité distingue les couches obtenues par pyrolyse de celles produites par les techniques de dépôts sous vide par pulvérisation cathodique, ces deux types de techniques constituent les deux voies les plus largement utilisées pour la production de couches minces sur un support verrier.

Par opposition les couches obtenues par pulvérisation cathodique sous vide sont dites « tendres ». Leur résistance mécanique ou chimique insuffisante fait que ces couches sont essentiellement utilisées dans des configurations où elles ne sont pas exposées à ces agressions. C'est le cas dans les vitrages multiples. Dans ces vitrages les couches sont tournées vers les espaces situés entre les feuilles.

Si l'utilisation de couches pyrolytiques est techniquement satisfaisante, elle est cependant liée étroitement à la disponibilité de précurseurs spécifiques adaptés. Les précurseurs disponibles ne permettent pas de produire l'ensemble des couches accessibles. Plus encore la mise en oeuvre des techniques de pyrolyse impose la présence d'installations spécifiques très lourdes qui doivent s'intégrer aux lignes de production lesquelles, par nature et par souci d'économie d'échelle, sont nécessairement en nombre limité et donc géographiquement distribuées de manière discrète sur les territoires auxquels ces produits sont destinés.

Les installations de revêtement par pulvérisation cathodique sous vide sont indépendantes de celle de fabrication du verre. Les opérations de revêtement par ces techniques sont conduites "en reprise" selon la terminologie usuelle, autrement dit sur du verre qui a été fabriqué antérieurement et qui entre temps peut avoir été stocké, transporté, redécoupé etc.

Pour des raisons de logistiques notamment, la possibilité de fournir des vitrages revêtus par pulvérisation cathodique offrant les qualités des produits obtenus par pyrolyse est un but de l'invention. Il est nécessaire bien évidemment que le coût de production de ces vitrages reste comparable à celui des vitrages revêtus par pyrolyse.

Fr 2793889 décrit des vitrages comportant par exemple une couche d'oxyde de titane dopé obtenue par pulvérisation cathodique. Des couches déposées par pulvérisation cathodique sous vide et qui conduisent à des facteurs solaires intéressants sont connues. C'est en particulier le cas de couches d'oxyde de titane. Ces couches montrent cependant, comme indiqué précédemment, une résistance mécanique insuffisante pour pouvoir être utilisées hors des faces non exposées des vitrages considérés.

Les inventeurs ont montré qu'un choix bien spécifique des matériaux constituant ces couches déposées par pulvérisation cathodique permettait d'atteindre les exigences de résistance indiquées.

Les inventeurs ont aussi montré que par un choix approprié des couches ou systèmes de couches produits, il est possible également de soumettre les vitrages en question à des traitements thermiques ultérieurs vigoureux, tels que des traitements de bombage ou de trempe sans pour autant altérer les caractéristiques essentielles conférées par ces couches.

Les couches ou systèmes de couches, considérés selon l'invention ne contiennent pas de couche de type métallique réfléchissant les infrarouges, notamment de couches à base d'argent, les systèmes comportant ces couches à base d'argent montrant systématiquement une fragilité certaine aux agressions extérieures.

Le but de l'invention est de fournir des vitrages répondant aux exigences énoncées ci-dessus.

Les inventeurs ont montré que ce but pouvait être atteint par des vitrages tels que définis à la revendication 1. Il est remarquable que les couches comprenant de l'oxyde de titane associé à d'autres oxydes permettent d'atteindre les caractéristiques recherchées notamment de résistance, alors que des couches d'oxyde de titane seul, comme indiqué précédemment, sont insuffisamment résistantes.

Les raisons de la qualité des couches utilisées selon l'invention ne sont pas parfaitement élucidées. Il est probable que le fait de déposer une couche composée d'oxyde de titane avec un autre oxyde conduit à une modification de la structure de la couche. La formation des cristaux est certainement modifiée. La présence de deux constituants, ou plus, dont les caractéristiques cristallographiques ne sont pas les mêmes, conduit à une croissance bien spécifique, probablement en évitant notamment la formation de structures plus fragiles comme les colonnes.

Une certaine variété d'oxydes est susceptible d'être associée à l'oxyde de titane dans cette couche. Parmi les oxydes utilisables figurent ceux des composés suivants : Al, Zr, Hf, V, Mn, Fe, Co, Ni, Cu, Si. Parmi ceux-ci des oxydes préférés sont notamment ceux de Al, Zr, Hf, et tout particulièrement l'oxyde de Zr.

De façon particulièrement avantageuse l'oxyde de zirconium inclus dans la couche à base d'oxyde de titane est présent à raison de 25 à 60% en poids et de préférence de 40 à 55%. L'oxyde de zirconium est particulièrement avantageux dans la mesure où, en plus de conférer les propriétés de résistance recherchées, son indice de réfraction étant proche de celui de l'oxyde de titane les propriétés optiques des vitrages revêtues, et notamment la réflexion, sont aussi voisines de celles que l'on observe avec une couche d'oxyde de titane.

La résistance de la couche à base d'oxyde de titane dépend de sa composition, elle dépend aussi de son épaisseur. Si une augmentation d'épaisseur s'accompagne d'une résistance accrue, au-delà d'un certain seuil l'amélioration n'est pas significative, le coût supplémentaire pour un dépôt plus épais devient inutile. La couche à base d'oxyde de titane selon l'invention présente une épaisseur comprise entre 15,0 et 90,0 nm, de préférence entre 20,0 et 50,0 nm, et avantageusement de 25,0 à 35,0 nm. Le choix de l'épaisseur de la couche à base d'oxyde de titane dépend aussi de la présence d'autres couches, mais encore des qualités recherchées en termes de réflexion, transmission et absorption de la lumière incidente. Pour les vitrages selon l'invention, la réflexion qui de façon générale est d'au moins 15% lorsque la couche ou le système de couches est appliqué sur du verre clair de 4mm d'épaisseur, est avantageusement dans les même conditions comprise entre 20 et 40%.

L'épaisseur de la couche à base d'oxyde de titane, ou du système de couches dans lequel elle est incluse, en particulier son indice, détermine la réflexion obtenue mais aussi les autres grandeurs optiques, notamment la transmission lumineuse. Pour les vitrages selon l'invention la transmission lumineuse étant d'au moins 60%. La lumière absorbée par le vitrage reste relativement peu élevée. Elle est avantageusement inférieure à 20% et de préférence inférieure à 10%.

Dans les vitrages selon l'invention la couche à base d'oxyde de titane peut être associée à d'autres couches pour en améliorer les propriétés ou conférer des propriétés que la couche à base d'oxyde de titane ne présenterait pas ou pas à un degré approprié à l'utilisation envisagée.

La protection conférée par la couche à base d'oxyde de titane n'implique pas nécessairement que la réflexion provienne exclusivement de cette couche. Une fois la résistance nécessaire obtenue, le système de couche peut inclure d'autres couches notamment pour contribuer à la réflexion. Dans cette perspective une couche à forte réflexion et donc à fort indice peut être associée à la couche à base d'oxyde de titane et d'un autre oxyde. Le plus commodément cette ou ces couches complémentaires devant présenter également un fort indice de réflexion, une couche particulièrement préférée est une couche d'oxyde de titane. Cette couche présente la particularité par rapport aux couches à base d'oxyde de titane d'avoir un indice de réfraction plus élevé. A titre indicatif les couches comportant en association des oxyde de titane et de zirconium (50/50% en poids) déposées sous vide ont un indice de l'ordre de 2,35. Les couches de $TiO_2$, stoechiométriques ou non, ces dernières notées habituellement TXO, couches qui peuvent être obtenues notamment en utilisant des cathodes céramiques, ont un indice de l'ordre de 2,45-2,50. La combinaison d'une couche de $TiO_2$ ou TXO, avec une couche d'alliage à base d'oxyde de titane permet donc le cas échéant de bénéficier simultanément d'une bonne résistance conférée par cette dernière couche, et globalement d'un indice plus élevé.

La mise en oeuvre des vitrages selon l'invention peut intervenir sans autre modification que la mise aux dimensions souhaitées et l'introduction dans des châssis. Les vitrages en question dans ce cas sont essentiellement plans. La nécessité de la mise aux dimensions après le revêtement, fait que les feuilles de verre entrant dans la composition de ces vitrages ne sont pas soumises préalablement à un traitement thermique. Les traitements thermiques en question en assurant la présence de contraintes, confèrent aux vitrages des propriétés mécaniques assurant à la fois une meilleure résistance au choc et surtout, en cas de choc violent fait que ces vitrages se brisent en multiples fragments de petites dimensions.

Lorsque que l'on souhaite disposer de vitrages soit incurvés soit trempés, il est nécessaire de passer par un traitement thermique à température élevée postérieurement à l'application de couches. Ces traitements conduisent les vitrages à des températures qui dépassent 550°C et souvent 600°C, et ceci pendant un temps plus ou moins long. Dans le cas de l'incurvation ou du bombage, la transformation peut ainsi nécessiter de maintenir ces températures pendant plusieurs minutes compte tenu notamment de l'inertie thermique du verre. Le temps de maintien à ces températures peut atteindre 5 minutes ou plus selon les techniques mises en oeuvre et l'épaisseur des feuilles traitées.

Les traitements thermiques de type trempe ou bombage sont connus pour être susceptibles d'altérer les couches minces déposées sur les feuilles de verre. Indépendamment des altérations qui peuvent apparaître dans la structure de certaines couches en raison même de la température, le substrat verrier peut aussi induire des modifications indésirables.

Globalement les couches à base d'oxyde de titane considérées selon l'invention, ne subissent pas de changement de structure préjudiciable dans les conditions de ces traitements thermiques. La structure des couches demeure sensiblement inchangée. Mais les feuilles de verre de type silico-sodo-calcique, autrement dit les verres les plus usuels, soumises à des températures élevées peuvent conduire à une altération des couches dont elles sont revêtues. Aux températures considérées les constituants alcalins de ces verres sont susceptibles de migrer et de diffuser dans les couches au contact du verre. La diffusion de ces éléments mobiles entraîne souvent l'apparition d'un voile ("haze") plus ou moins prononcé.

L'apparition du voile correspond à un mécanisme de diffusion lumineuse dû à la présence des éléments étrangers à la structure de la couche.

En pratique les produits utilisés doivent être bien transparents. La proportion de lumière diffusée par rapport à la lumière transmise ne doit pas excéder 2% et de préférence pas 1%. Ces limites peuvent être dépassées si aucune précaution n'est prise pour protéger les couches du type à base d'oxyde de titane utilisées selon l'invention.

Pour prévenir les phénomènes de diffusion, notamment celle des ions alcalins du verre dans les couches, il est connu de disposer des couches qui s'opposent au passage de ces ions, couches qui sont interposées entre le substrat et la couche à protéger. Des couches de protection de ce type sont notamment les couches de $SiO_2$. Si leur qualité de barrière est bien connue, leur production par pulvérisation cathodique reste relativement coûteuse. Dans la mesure où il est souhaitable de procéder au dépôt de l'ensemble des couches de la même manière et dans un seul passage, il peut être préférable de substituer aux couches de silice des couches présentant des propriétés analogues mais plus faciles à réaliser.

Selon l'invention, comme couche faisant obstacle à la diffusion des constituants du substrat dans la couche à base d'oxyde de titane modifiée, il est proposé d'utiliser soit une couche de $SiO_2$, soit au moins une couche à base d'oxyde d'étain soit encore une couche de nitrure de silicium $Si_3N_4$.

Lorsqu'on utilise une couche à base d'oxyde d'étain elle comprend au moins 30% et de préférence au moins 40% en poids d'oxyde d'étain.

La couche à base d'oxyde d'étain comprend aussi de préférence de l'oxyde de zinc. La combinaison de ces deux oxydes offre l'avantage, en plus d'un taux de dépôt élevé par les techniques de pulvérisation cathodique, de conduire à des couches dont la structure est bien stable dans les traitements thermiques considérés.

L'oxyde de zinc seul n'est pas souhaitable comme couche faisant obstacle à la diffusion en raison de sa tendance à constituer des structures colonnaires, en particulier lorsque son épaisseur dépasse une dizaine de nanomètres. Ces structures sont peu efficaces contre les phénomènes de diffusion.

La combinaison des oxydes de zinc et d'étain prévient la formation de structures colonnaires pour autant que la teneur en oxyde d'étain reste suffisante.

La présence d'une couche faisant obstacle à la diffusion des constituants du verre modifie les propriétés optiques du vitrage. En particulier la présence d'une couche à base d'oxyde d'étain, dont l'indice de réfraction est inférieur à celui de la couche à base d'oxyde de titane, modifie la réflexion.

Pour ne pas réduire de manière excessive la réflexion du vitrage il est préférable de faire en sorte, lorsqu'une couche à base d'oxyde d'étain est utilisée, de bien adapter son épaisseur. Celle-ci est de préférence inférieure à 1,2 fois l'épaisseur de la couche à base d'oxyde de titane.

Les couches ou systèmes de couches utilisés selon l'invention doivent encore conduire à des vitrages dont la coloration induite par ces couches répond à la demande du marché. Certaines colorations notamment en réflexion doivent être écartées. C'est le cas en particulier des colorations globalement "pourpres". Ces colorations se présentent lorsque analysées dans le système du CIE (Comité International de l'Eclairage) les paramètres a* et b* répondent aux conditions suivantes : pour un illuminant D et pour un angle solide de 10° au plus a*≤0 et b*≤6. Il est particulièrement important d'avoir systématiquement a* non positif. Pour les valeurs négatives de a* la coloration est soit légèrement bleu soit légèrement verte. Ces colorations en réflexion sont acceptables même si la préférence est la neutralité de coloration.

Il est aussi préférable, dans le cas d'un traitement thermique, que celui-ci n'entraine pas une modification significative de la coloration en réflexion. Lorsque les produits offrent substantiellement les mêmes colorations il est possible d'utiliser dans un même ensemble des produits par exemple bombés et d'autres qui ne le sont pas, sans différence d'aspect. Les produits sont juxtaposables sans nuire à l'esthétique.

En pratique plus les produits sont "neutres" plus leur coloration, avant et après traitement thermique, permet leur juxtaposition.

Dans la pratique des vitrages répondant à ces exigences de coloration présentent de préférence, avant et après traitement thermique, des variations de a* et b* telles que $\Delta E^* \leq 2$ et avantageusement $\Delta E^* \leq 1$, avec :

$$\Delta E^* = (\Delta a^{*2} + \Delta b^{*2})^{\frac{1}{2}}$$

En dehors des couches qui déterminent les caractéristiques optiques des vitrages selon l'invention, et dans le but de protéger encore plus ces couches contre les risques de détérioration dans les opérations ultérieures notamment de stockage et de transport, il est possible et avantageux de recouvrir ces couches par un revêtement temporaire qui est éliminé avant la pose de ces vitrages.

Il est connu de recouvrir les vitrages de pellicules de cires ou polymères divers solubles qui peuvent être éliminés par lavage. Ces produits peuvent être utilisés pour protéger les couches mises en oeuvre selon l'invention.

L'utilisation de ces produits de protection nécessite deux opérations supplémentaires sur les vitrages, l'application d'une part et le lavage ultérieur d'autre part. Dans le cas des vitrages devant subir un traitement thermique, il est préférable d'utiliser un revêtement de carbone, lequel peut être intégré dans les opérations de dépôt par pulvérisation cathodique, et dont l'élimination s'opère d'elle-même lors du traitement thermique par combustion au contact de l'air.

Les vitrages selon l'invention sont constitués à partir de feuilles de verre de différentes épaisseurs. Ils peuvent aussi être constitués de feuilles de verre clair ou coloré dans la masse, principalement pour leur conférer des caractéristiques esthétiques, mais aussi éventuellement pour aménager leurs propriétés opto-énergétiques.

Il est possible d'utiliser des verres plus absorbants que les verres clairs, notamment des verres gris ou des verres à dominante légèrement bleue ou verte. De façon préférée lorsque des verres colorés sont utilisés, la longueur d'onde dominante en réflexion $\lambda_m$, pour un illuminant D65 dans un angle solide de 2°, est comprise entre 475 et 600nm.

L'invention est décrite de manière détaillée dans la suite par des exemples de mise en oeuvre de l'invention, le cas échéant en faisant référence aux dessins annexés dans lesquels les figures 1 à 3 sont des représentations schématiques de vitrages selon l'invention.

La figure 1 montre un vitrage 1 comportant une couche à base d'oxyde de titane 2. Les épaisseurs respectives ne sont pas respectées par mesure de clarté.

La figure 2 est un vitrage selon l'invention qui, en plus de la couche à base d'oxyde de titane 2, comporte une couche 3 dont le rôle est de faire obstacle à la diffusion de constituants de la feuille de verre 1.

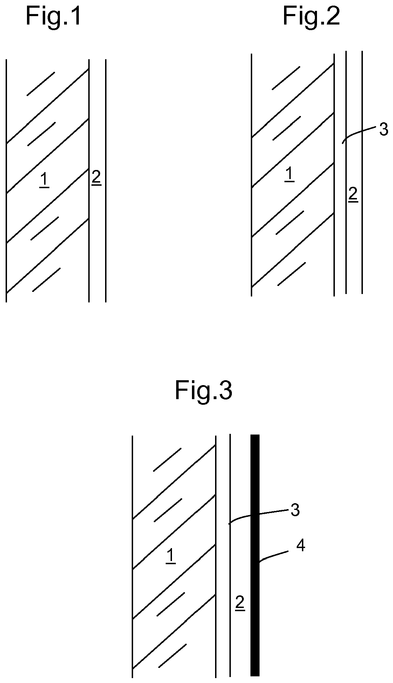

La figure 3 représente un vitrage selon l'invention qui, en plus des couches précédentes, comporte un revêtement de protection 4. Le revêtement en question qui est appliqué à titre temporaire, a pour rôle essentiel de prévenir les rayures griffures et autres altérations mécaniques susceptibles d'atteindre les couches fonctionnelles 3. Cette couche dans le cas des vitrages subissant un traitement thermique postérieur à la formation des couches fonctionnelles, est avantageusement constitué d'un matériau qui s'élimine par combustion au cours de ce traitement thermique. Une couche de carbone est particulièrement avantageuse pour constituer ce revêtement.

Les produits selon l'invention sont analysés notamment pour leurs qualités de résistance mécanique ou chimique. Les épreuves auxquelles ils sont soumis sont les mêmes que celles qui sont utilisées pour l'évaluation des vitrages analogues dont les couches fonctionnelles sont produites par pyrolyse. Les vitrages selon l'invention doivent atteindre des performances équivalentes.

Les essais comportent systématiquement des épreuves de résistance à l'humidité (21 jours en chambre climatique), des épreuves de résistance chimique (brouillard salin neutre de 21 jours et exposition au $SO_2$ cinq cycles), une épreuve de résistance à l'abrasion (AWRT pour Automatic Web Rub Test) et aux griffes (DBT pour Dry Brush Test). Les épreuves de résistance chimique sont celles décrites dans le projet de norme prEN 1096-2. Les tests d'abrasion sont spécifiques aux essais des couches déposées par "magnetron sputtering". Ces deux tests sont sensiblement plus "sévères" que les tests analogues décrits dans la norme indiquée ci-dessus. Autrement dit, les épreuves d'abrasion réussies dans les exemples réalisés, sont nécessairement satisfaisantes dans les conditions de cette norme.

L'épreuve en chambre climatique consiste à exposer l'échantillon dans une étuve maintenue à 40±1,5°C pendant 21 jours. L'épreuve est réussie lorsque l'échantillon demeure exempt de taches. Le vieillissement dans ces conditions pour chaque jour correspond à une exposition d'un an aux aléas atmosphériques usuels.

L'échantillon ne doit pas être décoloré, ni de façon générale supporter des défauts de quelque nature que ce soit, comme le décollement de la couche.

L'essai de résistance à l'atmosphère acide est conduit de la façon suivante :

L'échantillon est placé dans une enceinte chargée d'atmosphère acide (deux litres d'eau pour 2 litres de $SO_2$) portée à 40°C pendant 8 heures. Ramené à la température ambiante, l'échantillon demeure encore 16 heures dans l'atmosphère en question. Le même cycle est répété 4 fois. La couche ne doit pas se détacher.

Le test de frottement humide "AWRT" (automatic wet rub test) est effectué avec une tête circulaire de téflon revêtue d'un tissu de coton (ADSOL ref. 40700004). Celle-ci est déplacée sous charge de 1050g sur la couche. Le coton est maintenu humide pendant toute l'épreuve avec de l'eau déminéralisée. La fréquence des oscillations est de 60 à 90 par minute. Les échantillons sont observés pour détecter les altérations de la couche.

L'épreuve de la brosse sèche "DBT" (dry brush test) est effectué sur un appareil Erichsen (modèle 494) équipé d'une brosse normalisée (ASTM D2486). Chaque fibre de la brosse a un diamètre de 0,3mm. Les fibres sont regroupées en faisceau de 4mm de diamètre. Le poids total appliqué par la brosse et son support est 454g. L'épreuve comprend 1000 cycles de va et vient.

Les mesures des grandeurs optiques sont faites selon la norme EN410.

Les échantillons sont réalisés sur des feuilles de verre "float" clair d'épaisseur 4mm.

Exemple 1.

On dépose une couche d'oxyde de titane comportant 12% d'atomes d'aluminium par rapport à l'ensemble des atomes métalliques. L'épaisseur de la couche est de 572Â.

Les essais de résistance chimique et mécanique sont satisfaisants. Les propriétés optiques de l'échantillon sont en transmission, réflexion (sous 2°) et pour les données colorimétriques (illuminant D65 sous 10°) en transmission et en réflexion :

| TL | R | a* trans. | b* trans. | a* ref. | b* ref. |
|------|------|------|------|------|------|
| 71,1 | 26,9 | 0,3 | -0,3 | -3,1 | 1,2 |

Exemples 2, 3 et 4 et 2', 3', 4'.

Les échantillons des exemples 2 et 3 comportent une couche d'oxyde de titane à 50% en poids les 50% restant étant d'oxyde de zirconium. Dans l'exemple 2 la couche a une épaisseur de 300Â. Pour l'exemple 3 la couche est de 600Â.

L'échantillon 4 comprend sur le verre une première couche d'oxyde d'étain à 50% en poids et d'oxyde de zinc à 50% en poids. Dans ce cas les deux couches ont chacune une épaisseur de 300Â.

Les échantillons 2', 3', 4' sont de structure identique aux précédents. Ils ont subi un traitement thermique à 670°C pendant 8 minutes 30.

Tous les échantillons sans traitement thermique satisfont aux épreuves chimiques. La résistance à l'abrasion est satisfaite pour les échantillons 3 et 4.

Les échantillons 2' présentent un voile un peu supérieur à la limite de ce qui est considéré comme acceptable. Les échantillons 3', de même nature mais dont la couche est une peu plus épaisse, sont un peu meilleurs en ce qui concerne la formation de voile dans les épreuves acides qui s'avèrent les plus sévères.

Les échantillons 3' et surtout 4' supportent avec succès les épreuves d'abrasion.

Les propriétés optiques de ces échantillons sont rapportées dans le tableau suivant :

| | TL | R | a* trans. | b* trans. | a* ref. | b* ref. | ΔE* ref |
|------|------|------|------|------|------|------|------|
| 2 | 75,93 | 21,04 | - 1,0 | 5,05 | - 1,41 | - 9,59 | |
| 2' | 75,44 | 21,33 | - 0,99 | 5,14 | - 1,54 | - 9,32 | 0,43 |
| 3 | 64,88 | 32,16 | - 0,05 | 0,98 | - 2,22 | - 0,81 | |
| 3' | 64,58 | 32,27 | - 0,09 | 0,70 | - 2,25 | - 0,21 | 0,60 |
| 4 | 69,48 | 27,54 | - 0,45 | 1,37 | - 2,13 | - 1,25 | |
| 4' | 70,41 | 26,06 | - 0,58 | 1,51 | - 2,00 | - 1,74 | 1,45 |

Exemples 5 à 12 et 5' à 12'.

Différents systèmes des couches comprenant une couche à base d'oxyde d'étain et une couche à base d'oxyde de zinc sont essayés dans les conditions précédentes.

La composition des systèmes de couches utilisés et leurs épaisseurs en Å sont rapportées dans le tableau suivant dans lequel :

- TZO indique une couche d'oxyde de titane à 50% en poids d'oxyde de zirconium ;
- ZSO5 indique une couche d'oxyde d'étain à 50% en poids d'oxyde de zinc ;
- TCrO indique une couche d'oxyde de titane à 8% en poids d'oxyde de chrome ;
- $SnO_2$ indique une couche d'oxyde d'étain sans autre oxyde

Les exemples 10 à 12 et 10' à 12' ne sont pas suivant l'invention.

|     | ZSO5 | SnO$_2$ | TZO | TCrO |
| --- | --- | --- | --- | --- |
| 5 | 300 | | 300 | |
| 6 | 250 | | 250 | |
| 7 | | 300 | 300 | |
| 8 | | 250 | 250 | |
| 9 | | 200 | 200 | |
| 10 | | 300 | | 300 |
| 11 | | 250 | | 250 |
| 12 | 250 | | | 250 |

Les échantillons soumis aux épreuves d'abrasion ont tous atteints le résultat quotté 4 qui correspond à ce qui est acceptable.

Soumis au traitement thermique précédemment utilisé (670°C, pendant 8 minutes 30), ils conduisent aux propriétés optiques réunies dans le tableau suivant dans lequel g est le facteur solaire.

|     | TL | R | g | Selec. | a* trans. | b* trans. | a* ref. | b* ref. |
| --- | --- | --- | --- | --- | --- | --- | --- | --- |
| 5' | 70,9 | 26,2 | 71,8 | 0,99 | - 0,2 | 4,5 | - 1,8 | - 5,8 |
| 6' | 74,7 | 23,1 | 74,3 | 1,01 | - 0,5 | 4,3 | - 1,5 | - 7,8 |
| 7' | 68,8 | 29,7 | 70,1 | 0,98 | 0 | 3,4 | - 2 | - 5,2 |
| 8' | 68,8 | 26,3 | 70,8 | 0,97 | 0,5 | 7,4 | - 1,8 | - 7,9 |
| 9' | 73,8 | 22,8 | 73,8 | 1 | - 0,3 | 6,1 | - 1,5 | - 9,2 |
| 10' | 71,4 | 26,6 | 71,7 | 1 | - 0,4 | 6,9 | - 1,9 | - 9,4 |
| 11' | 72,1 | 25,7 | 72,2 | 1 | - 0,5 | 6,5 | - 2 | - 8,9 |
| 12' | 7-,8 | 20 | 75,8 | 1,01 | - 0,7 | 4,9 | - 0,5 | - 6,8 |

Exemples 13 à 15.

Pour ces exemples on utilise une couche de SiO$_2$ en protection contre la diffusion. Les épaisseurs des couches de SiO$_2$ et d'oxyde de titane comportant 50% d'oxyde de zirconium sont les sont exprimées en Å. Le tableau comprend aussi les valeurs de réflexion et les variations de réflexion et des valeurs a* et b* après que le vitrage ait été soumis au traitement thermique indiqué précédemment:

|     | SiO$_2$ | TZO | R | ΔR | Δa* | Δb* |
| --- | --- | --- | --- | --- | --- | --- |
| 13 | 100 | 500 | 29,49 | 0,03 | - 0,01 | - 0,11 |
| 14 | 300 | 500 | 29,4 | 0,05 | - 0,04 | - 0,31 |
| 15 | 170 | 380 | 24,64 | - 0,02 | - 0,08 | 0 |

Les modifications des propriétés consécutives au traitement thermique restent très limitées.

Les échantillons satisfont par ailleurs aux épreuves de résistance à l'humidité , au brouillard salin, à la chambre climatique et à l'abrasion. Exemples 16 à 19.

Les exemples concernent des vitrages dans lesquels la couche d'oxyde de titane modifiée est associée à une couche prévenant la diffusion composée de nitrure de silicium. Les résultats analogues aux précédents figurent aussi dans le tableau.

|    | Si$_3$N$_4$ | TZO | R | ΔR | Δa* | Δb* |
|----|------|-----|-------|--------|-------|--------|
| 16 | 100 | 500 | 29,94 | 0,05 | 0 | - 2,03 |
| 17 | 250 | 250 | 24,48 | - 0,98 | - 0,04 | - 0,29 |
| 18 | 300 | 500 | 28,06 | 0,46 | - 0,11 | - 2,1 |
| 19 | 300 | 200 | 23,37 | - 1,01 | 0,07 | - 0,26 |

Comme précédemment les variations occasionnées par le traitement thermique restent limitées et les résistances mécaniques et chimiques satisfont les exigences pratiques.

Exemples 20 à 22 (en dehors de l'invention).

Pour ces exemples la couche à base de TiO$_2$ (TNO) est modifiée par l'oxyde de niobium (50% en poids). La couche anti-diffusion est de l'oxyde d'étain. Les résultats analogues aux précédents figurent aussi dans le tableau.

|    | SnO$_2$ | TNO | R | ΔR | Δa* | Δb* |
|----|------|-----|------|-------|-------|-------|
| 20 | 300 | 300 | 30,0 | - 1,1 | - 1,4 | - 1,4 |
| 21 | 400 | 200 | 28,1 | - 0,5 | - 2,1 | - 2,1 |
| 22 | 400 | 400 | 29,6 | 0 | - 3,6 | - 3,6 |

Comme précédemment les échantillons présentent une bonne résistance mécanique et chimique.

Exemples 23 à 29.

Les exemples sont tous conduits avec plusieurs couches conférant les propriétés réfléchissantes. Une couche d'oxyde de titane est associée à la couche qui assure la résistance chimique et mécanique. Pour les exemples 23 et 24 la couche supérieure (TZO) est à base de titane et d'oxyde de zirconium (50% en poids). Les exemples 25 à 29, en dehors de l'invention, ont pour couche supérieure (TNO) une couche comprenant de l'oxyde de niobium (50% en poids).
Les résultats obtenus sont les suivants :

|    | TiO$_2$ | TZO/TNO | R | ΔR | Δa* | Δb* |
|----|------|---------|------|-------|-------|-------|
| 23 | 200 | 300 | 32,4 | - 2,5 | 1,0 | 1,0 |
| 24 | 400 | 400 | 29,5 | 0,8 | 0 | 0 |
| 25 | 300 | 300 | 34,6 | - 2,1 | 2,3 | 2,3 |
| 26 | 200 | 200 | 30,7 | - 2,4 | 1,6 | 1,6 |
| 27 | 300 | 250 | 34,3 | - 1,2 | 1,4 | 1,4 |
| 28 | 300 | 350 | 33,6 | 0,6 | - 0,3 | - 0,3 |
| 29 | 300 | 350 | 34,3 | - 2,4 | 2,8 | 2,8 |

La superposition des couches à fort indice conduit bien à l'accroissement de la réflexion globale. Les qualités mécaniques et chimiques sont satisfaisantes.

Exemples 30 à 32.

Tous ces exemples sont réalisés en utilisant un système de couches réfléchissantes dont une couche d'oxyde de titane déposée à partir d'une cible céramique (TXO). Les couches supérieures sont d'alliage d'oxyde de titane et d'oxyde de zirconium à 50% en poids (30), ou à 25% d'oxyde de zirconium (31) soit encore d'une couche analogue à la précédente surmontée d'une couche d'un alliage triple d'oxyde de titane de zirconium et de silicium (respectivement 45/45/6% en poids, la cible contient encore de l'oxyde d'yttrium sans fonction particulière) désigné TZSO (32).

|    | TXO | TZO(TZSO) | R     | ΔR    | Δa*    | Δb*    |
|----|-----|-----------|-------|-------|--------|--------|
| 30 | 350 | 100       | 30,96 | 3,16  | - 0,14 | 2,52   |
| 31 | 107 | 352       | 28,38 | - 1,03| - 0,13 | - 0,31 |
| 32 | 107 | 352+100   | 29,98 | - 0,19| 0,15   | - 0,35 |

Le rôle de la couche TXO sur la réflexion est encore une fois bien illustré. Même pour des épaisseurs totales analogues, l'exemple 30 comportant la couche TXO la plus épaisse est plus réfléchissant que l'exemple 31. L'addition de la couche TSZO accroît aussi la réflexion de l'exemple 32 par comparaison à celle de l'exemple 30.

## Revendications

1. Vitrage comprenant au moins une couche supérieure déposée par pulvérisation cathodique sous vide, couche composée d'un ou plusieurs oxydes des éléments du groupe comprenant : Al, Zr, Hf, V, Mn, Fe, Co, Ni, Cu, Si et comprenant pour une proportion pondérale qui n'est pas inférieure à 40% et pas supérieure à 95%, d'oxyde de titane, l'épaisseur de la couche en question et éventuellement de celles des autres couches également constituées d'oxydes métalliques présentes, étant choisie(s) de sorte que sur une feuille de verre « float » clair de 4mm d'épaisseur, cette ou ces couches conduiraient à une réflexion d'au moins 15% et une transmission lumineuse d'au moins 60%, l'épaisseur de la couche supérieure à base d'oxyde de titane étant choisie entre 15,0 et 90,0 nm et de préférence entre 20,0 et 50,0 nm.

2. Vitrage selon la revendication précédente dans lequel l'épaisseur de la couche à base d'oxyde de titane ou du système de couches comprenant celle-ci, est choisie de telle sorte que sur une feuille de verre « float » clair de 4mm d'épaisseur, cette ou ces couches conduiraient à une réflexion de 20 à 40%.

3. Vitrage selon l'une des revendications précédentes dans lequel la couche à base d'oxyde de titane et éventuellement les autres couches d'oxydes présentes sont telles qu'appliquées sur une feuille de verre « float » clair de 4mm d'épaisseur, l'absorption de cette feuille revêtue serait inférieure à 20% de la lumière incidente et de préférence inférieure à 10%.

4. Vitrage selon l'une des revendications précédentes dans lequel la couche ou le système de couches satisfait aux tests de résistance à la condensation, au brouillard salin et au test d'acidité tels que définis dans le projet de norme prEN 1096-2.

5. Vitrage selon l'une des revendications précédentes dans lequel la couleur en réflexion dans le système CIE est telle que sous illuminant D et dans l'angle solide de 10° par rapport à la normale au vitrage, a*≤0 et b*≤6.

6. Vitrage selon l'une des revendications précédentes, pour lequel, lorsqu'il est soumis à un traitement thermique d'au moins 550°C et pendant 5 minutes, le voile mesuré ne dépasse pas 2 et de préférence 1%.

7. Vitrage selon l'une des revendications précédentes dans lequel la couche à base d'oxyde de titane comprend de l'oxyde de zirconium représentant entre 25 et 60% en poids et de préférence entre 40 et 55%.

8. Vitrage selon l'une des revendications précédentes comprenant outre la couche à base d'oxyde de titane et d'au moins un autre oxyde, et située entre cette couche et la feuille de verre, au moins une couche d'oxyde à indice de réfraction supérieur à celui de cette couche à base d'oxyde de titane.

9. Vitrage selon la revendication 8 dans lequel la couche à indice de réfraction supérieur est une couche d'oxyde de titane.

10. Vitrage selon l'une des revendications précédentes comprenant, disposée entre la feuille de verre et cette couche à base d'oxyde de titane, au moins une couche de $SiO_2$ ou de $Si_3N_4$.

11. Vitrage selon l'une des revendications 1 à 9 comprenant, disposée entre la feuille de verre et cette couche à base d'oxyde de titane, au moins une couche à base d'oxyde d'étain.

12. Vitrage selon la revendication 11 dans lequel la couche à base d'oxyde d'étain comprend au moins 30% et de préférence au moins 40% en poids d'oxyde d'étain le restant étant constitué essentiellement d'oxyde de zinc.

13. Vitrage selon la revendication 12 dans lequel la couche à base d'oxyde d'étain présente une épaisseur qui n'est pas supérieure à 1,2 fois l'épaisseur de la couche à base d'oxyde de titane.

14. Vitrage selon l'une des revendications précédentes dans lequel la feuille de verre revêtue est une feuille colorée dans la masse avec une longueur d'onde dominante en réflexion $\lambda_m$ sous illuminant D65 et 2° d'angle solide, comprise entre 475 et 600nm.

15. Vitrage selon la revendication 11 dans lequel la couche à base d'oxyde de titane est constituée en proportions pondérales sensiblement égales d'oxyde de titane et d'oxyde de zirconium, une couche, constituée en proportions sensiblement égales d'oxyde d'étain et d'oxyde de zinc, étant disposée entre la feuille de verre et la couche à base d'oxyde de titane.

**Patentansprüche**

1. Verglasung, umfassend mindestens eine obere Schicht, die durch Sputtern unter Vakuum abgeschieden wird, wobei die Schicht aus einem oder mehreren Oxiden von Elementen der Al, Zr, Hf, V, Mn, Fe, Co, Ni, Cu, Si umfassenden Gruppe besteht und in einem Gewichtsanteil von nicht weniger als 40% und nicht über 95% Titanoxid umfasst, wobei die Dicke der betreffenden Schicht und gegebenenfalls diejenigen anderer vorhandener Schichten, die ebenfalls aus Metalloxiden bestehen, so gewählt ist (sind), dass auf einer klaren Floatglas-Platte mit einer Dicke von 4 mm diese Schicht oder diese Schichten zu einer Reflexion von mindestens 15% und einer Lichttransmission von mindestens 60% führen würden, wobei die Dicke der oberen Schicht auf der Basis von Titanoxid zwischen 15,0 und 90,0 nm und vorzugsweise zwischen 20,0 und 50,0 nm gewählt wird.

2. Verglasung nach dem vorhergehenden Anspruch, wobei die Dicke der Schicht auf der Basis von Titanoxid oder des Systems von Schichten, die diese umfassen, derart gewählt ist, dass auf einer klaren Floatglas-Platte mit einer Dicke von 4 mm diese Schicht oder diese Schichten zu einer Reflexion von 20 bis 40% führen würden.

3. Verglasung nach einem der vorhergehenden Ansprüche, wobei die Schicht auf der Basis von Titanoxid und gegebenenfalls die anderen vorhandenen Schichten von Oxiden derart sind, dass, wenn sie auf eine klare Floatglas-Platte mit einer Dicke von 4 mm Dicke aufgebracht sind, die Absorption dieser beschichteten Platte weniger als 20% des einfallenden Lichts und vorzugsweise weniger als 10% betrüge.

4. Verglasung nach einem der vorhergehenden Ansprüche, wobei die Schicht oder das System von Schichten die Prüfungen der Beständigkeit gegen Kondensation, Salznebel und die Säureprüfung, wie im Normentwurf prEN 1096-2 definiert, erfüllt.

5. Verglasung nach einem der vorhergehenden Ansprüche, wobei die Reflexionsfärbung im CIE-System derart ist, dass unter Leuchtmittel D und in einem Raumwinkel von 10° in Bezug auf die Normale zur Verglasung $a^* \leq 0$ und $b^* \leq 6$.

6. Verglasung nach einem der vorhergehenden Ansprüche, wobei, wenn sie einer thermischen Behandlung bei mindestens 550°C und während 5 Minuten unterzogen wird, die gemessene Trübung 2 und vorzugsweise 1% nicht übersteigt.

7. Verglasung nach einem der vorhergehenden Ansprüche, wobei die Schicht auf der Basis von Titanoxid Zirkonoxid umfasst, das zwischen 25 und 60 Gew.-% und vorzugsweise zwischen 40 und 55% ausmacht.

8. Verglasung nach einem der vorhergehenden Ansprüche, die außer der Schicht auf der Basis von Titanoxid und mindestens einem anderen Oxid und angeordnet zwischen dieser Schicht und der Glasplatte mindestens eine Oxidschicht mit einem höheren Brechungsindex als derjenige der Schicht auf der Basis von Titanoxid umfasst.

9. Verglasung nach Anspruch 8, wobei die Schicht mit höherem Brechungsindex eine Titanoxidschicht ist.

**10.** Verglasung nach einem der vorhergehenden Ansprüche, die angeordnet zwischen der Glasplatte und dieser Schicht auf der Basis von Titanoxid mindestens eine Schicht von $SiO_2$ oder $Si_3N_4$ umfasst.

**11.** Verglasung nach einem der Ansprüche 1 bis 9, die angeordnet zwischen der Glasscheibe und dieser Schicht auf der Basis von Titanoxid mindestens eine Schicht auf der Basis von Zinnoxid umfasst.

**12.** Verglasung nach Anspruch 11, wobei die Schicht auf der Basis von Zinnoxid mindestens 30 Gew.-% und vorzugsweise mindestens 40 Gew.-% Zinnoxid umfasst, wobei der Rest im Wesentlichen aus Zinkoxid besteht.

**13.** Verglasung nach Anspruch 12, wobei die Schicht auf der Basis von Zinnoxid eine Dicke aufweist, die nicht mehr als das 1,2-Fache der Dicke der Schicht auf der Basis von Titanoxid beträgt.

**14.** Verglasung nach einem der vorhergehenden Ansprüche, wobei die beschichtete Glasplatte eine durchgefärbte Platte mit einer dominanten Reflexionswellenlänge $\lambda_m$ unter Leuchtmittel D65 und 2° Raumwinkel zwischen 475 und 600 nm ist.

**15.** Verglasung nach Anspruch 11, bei die Schicht auf der Basis von Titanoxid aus im Wesentlichen gleichen Gewichtsanteilen von Titanoxid und Zirkonoxid besteht, wobei eine Schicht, die aus im Wesentlichen gleichen Anteilen von Zinnoxid und Zinkoxid besteht, zwischen der Glasplatte und der Schicht auf der Basis von Titanoxid angeordnet ist.

**Claims**

**1.** Glazing comprising at least one upper layer deposited by vacuum cathode sputtering, layer composed of one or more oxides of the elements from the group comprising: Al, Zr, Hf, V, Mn, Fe, Co, Ni, Cu, Si and comprising, for a weight proportion that is no less than 40% and no greater than 95%, titanium oxide, the thickness of the layer in question and optionally of those of the other layers also formed of metal oxides that are present being chosen so that, on a 4 mm-thick clear float glass sheet, this or these layer(s) would result in a reflection of at least 15% and a light transmission of at least 60%, the thickness of the upper layer based on titanium oxide being chosen between 15.0 and 90.0 nm and preferably between 20.0 and 50.0 nm.

**2.** Glazing according to the preceding claim, in which the thickness of the layer based on titanium oxide, or of the system of layers comprising this layer, is chosen so that, on a 4 mm-thick clear float glass sheet, this or these layer(s) would result in a reflection of 20% to 40%.

**3.** Glazing according to either of the preceding claims, in which the layer based on titanium oxide and optionally the other layers of oxides present are such that, applied to a 4 mm-thick clear float glass sheet, the absorption of this coated sheet would be less than 20% of the incident light and preferably less than 10%.

**4.** Glazing according to one of the preceding claims, in which the layer or the system of layers satisfies the tests of resistance to condensation, to salt spray and the acidity test as defined in the draft standard prEN 1096-2.

**5.** Glazing according to one of the preceding claims, in which the colour in reflection in the CIE system is such that under illuminant D and under the solid angle of 10° relative to the normal to the glazing, $a^* \leq 0$ and $b^* \leq 6$.

**6.** Glazing according to one of the preceding claims, for which, when it is subjected to a heat treatment of at least 550°C and for 5 minutes, the haze measured does not exceed 2% and preferably 1%.

**7.** Glazing according to one of the preceding claims, in which the layer based on titanium oxide comprises zirconium oxide representing between 25% and 60% by weight and preferably between 40% and 55%.

**8.** Glazing according to one of the preceding claims, comprising, in addition to the layer based on titanium oxide and on at least one other oxide, and situated between this layer and the glass sheet, at least one layer of oxide having a refractive index higher than that of said layer based on titanium oxide.

**9.** Glazing according to Claim 8, in which the layer having a higher refractive index is a layer of titanium oxide.

**10.** Glazing according to one of the preceding claims, comprising, positioned between the glass sheet and this layer based on titanium oxide, at least one layer of SiO2 or of Si3N4.

11. Glazing according to one of Claims 1 to 9, comprising, positioned between the glass sheet and this layer based on titanium oxide, at least one layer based on tin oxide.

12. Glazing according to Claim 11, in which the layer based on tin oxide comprises at least 30% and preferably at least 40% by weight of tin oxide, the remainder being formed essentially of zinc oxide.

13. Glazing according to Claim 12, in which the layer based on tin oxide has a thickness which is no greater than 1.2 times the thickness of the layer based on titanium oxide.

14. Glazing according to one of the preceding claims, in which the coated glass sheet is a bulk-coloured sheet with a dominant wavelength in reflection λm, under illuminant D65 and a 2° solid angle, of between 475 and 600 nm.

15. Glazing according to Claim 11, in which the layer based on titanium oxide is formed of substantially equal weight proportions of titanium oxide and zirconium oxide, a layer, formed of substantially equal proportions of tin oxide and zinc oxide, being positioned between the glass sheet and the layer based on titanium oxide.

# Fig.1

# Fig.2

# Fig.3